Europäisches Patentamt

(19) European Patent Office

Office européen des brevets

(11) Numéro de publication : **0 323 298 B1**

(12) **FASCICULE DE BREVET EUROPEEN**

(45) Date de publication du fascicule du brevet :
06.11.91 Bulletin 91/45

(51) Int. Cl.⁵ : **F16D 1/08**, B62D 1/16,
**F16B 41/00**

(21) Numéro de dépôt : **88403155.0**

(22) Date de dépôt : **12.12.88**

(54) **Dispositif d'accouplement et son application notamment à une direction d'automobile.**

(30) Priorité : 31.12.87 FR 8718490

(43) Date de publication de la demande :
05.07.89 Bulletin 89/27

(45) Mention de la délivrance du brevet :
06.11.91 Bulletin 91/45

(84) Etats contractants désignés :
BE DE ES GB IT NL SE

(56) Documents cités :
EP-A- 0 128 813
FR-A- 1 466 538
FR-A- 2 388 161
FR-A- 2 555 263
US-A- 2 394 729
US-A- 3 999 583
US-A- 4 504 164

(73) Titulaire : **NACAM**
**Route de Blois**
**F-41100 Vendome (FR)**

(72) Inventeur : **Haldric, Bernard**
**15, rue Charles Lindbergh**
**F-41100 Vendome (FR)**
Inventeur : **Feucht, Pascal**
**36, rue des Maillettes**
**F-41100 Vendome (FR)**
Inventeur : **Fernand, Christian**
**1, Allée André Gide Les Rottes**
**F-41100 Vendome (FR)**

(74) Mandataire : **Phélip, Bruno et al**
**c/o Cabinet Harlé & Phélip 21, rue de La**
**Rochefoucauld**
**F-75009 Paris (FR)**

## Description

L'invention concerne les dispositifs d'accouplement qui permettent de réunir un arbre menant à un arbre mené tels, notamment, une tige à queue de section non circulaire et un étrier de section en U et, plus particulièrement, un dispositif d'accouplement de ce type à mise en place rapide et sûr aussi bien pendant cette opération qu'en fonctionnement.

Dans le nombreux secteurs techniques il est nécessaire d'accoupler deux arbres, par exemple une tige avec un élément tel un étrier associés chacun à l'un des arbres, de manière à solidariser en rotation ces arbres.

Ce type de situation se rencontre, par exemple dans l'industrie automobile lorsqu'il faut associer la tige d'un pignon d'un boîtier de direction à la mâchoire d'un joint de cardan solidaire d'un arbre d'une colonne de direction.

Une technique actuellement utilisée consiste à faire en sorte que l'étrier associé à l'arbre à solidariser à la queue de pignon soit relié à l'une des mâchoires du joint de cardan de manière à pouvoir basculer autour de l'un des axes du croisillon de cardan et à faire en sorte que cet étrier vienne coiffer une queue à section non circulaire du pignon lorsqu'il est rabattu. La queue de section non circulaire de la tige qui se trouve alors emprisonnée dans l'étrier est immobilisée à l'aide de moyens de blocage.

Ces moyens de blocage sont habituellement constitués d'une tige filetée munie à sa périphérie de cames, que l'on enfile dans l'étrier puis que l'on serre sur ce dernier à l'aide d'un écrou. On fait tourner la tige de manière que les cames de sa périphérie viennent chasser dans le fond de l'étrier la queue à section non circulaire de la tige puis on serre celle-ci en vissant l'écrou sur l'extrémité du corps fileté de la vis qui fait saillie hors de l'étrier. Si l'on utilise un écrou équipé d'un frein, il est classique de visser celui-ci sur la tige qui y a été engagée. Après quelques tours d'écrou, la tige rencontre le frein et le couple de serrage augmente. En poursuivant le vissage de l'écrou, celui-ci entraîne en rotation avec lui la tige dont l'une des cames vient en contact avec la queue qu'elle chasse alors au fond de l'étrier. Un complément de vissage assure ensuite le blocage.

Si cette technique donne généralement satisfaction, en fonctionnement elle est loin d'être sûre et elle est loin d'être sans inconvénients au moment de l'assemblage.

Comme on le comprend aisément, si lorsque l'étrier a été rabattu par basculement sur la queue pour la coiffer l'arbre portant le cardan tourne d'un demi-tour avant que les moyens de blocage aient été mis en place, l'étrier peut se dégager en basculant dans le sens opposé sous l'effet de la gravité. Toute l'opération est alors à reprendre.

Si une telle situation se produit au moment du montage, aussi désagréable soit elle, elle n'est pas grave.

Toutefois, si les moyens de blocage viennent à se desserrer et à échapper à l'étrier ce dernier risque de ce dégager, comme exposé précédemment, et les deux arbres initialement accouplés ne sont plus solidarisés. Cette situation insidieuse est, on l'imagine aisément, particulièrement dangereuse s'il s'agit d'une direction d'automobile.

Un tel assemblage est, habituellement, conduit dans le compartiment moteur d'un véhicule où la place est particulièrement comptée. Pour mettre en place la tige et l'écrou l'opérateur doit utiliser simultanément ses deux mains. Ceci est particulièrement délicat si on se rappelle qu'outre l'emplacement libre restreint dont il dispose, l'accès en est très souvent malcommode.

Un état de la technique est, par exemple, illustré par le document US 4504164 qui concerne la réunion l'un à l'autre de deux arbres coulissant l'un dans l'autre. Selon la technique proposée, l'arbre extérieur reçoit à poste fixe une pince élastique avec un manchon qui a approximativement la forme de la lettre D et qui est équipé de deux bras latéraux destinés à pincer cet arbre et définissant entre eux un chenal étroit que ne traverse jamais l'arbre intérieur qui n'est pas conçu pour s'y engager.

L'invention a pour but de remédier aux inconvénients de la technique connue en faisant en sorte que le nouveau dispositif proposé soit d'un montage rapide et soit sûr et puisse être mis en oeuvre d'une seule main.

L'invention a pour objet un dispositif d'accouplement rapide à sécurité d'un arbre menant et d'un arbre mené du type indiqué dans le préambule de la revendication principale et dont les particularités ressortent notamment de la partie caractérisante de celle-ci.

L'invention a aussi pour objet une application de ce dispositif aux directions d'automobiles.

D'autres caractéristiques de l'invention ressortiront de la lecture de la description et des revendications qui suivent et de l'examen du dessin annexé, donné seulement à titre d'exemple, où :

— la Fig. 1 est une vue perspective éclatée d'un dispositif d'accouplement conforme à la technique antérieure ;

— la Fig. 2 est une vue perspective d'un mode de réalisation d'un cavalier du dispositif d'accouplement selon l'invention ;

— les Fig. 3A, 3B et 3C sont des vues schématiques de détail du mode de réalisation de l'invention de la Fig. 2 représenté dans différentes phases de sa mise en oeuvre ;

— la Fig. 4 est une vue analogue à celle de la Fig. 3A d'une variante d'exécution ;

— la Fig. 5 est une vue de détail d'un dispositif selon l'invention ; et

— les Fig. 6A et 6B sont des vues d'une autre variante d'exécution d'un cavalier du dispositif suivant l'invention en cours d'assemblage.

Dans la suite on ne décrira que ce qui concerne l'invention. Pour le surplus, le spécialiste de la technique considérée puisera dans les solutions courantes à sa disposition pour faire face aux impératifs auxquels il est confronté.

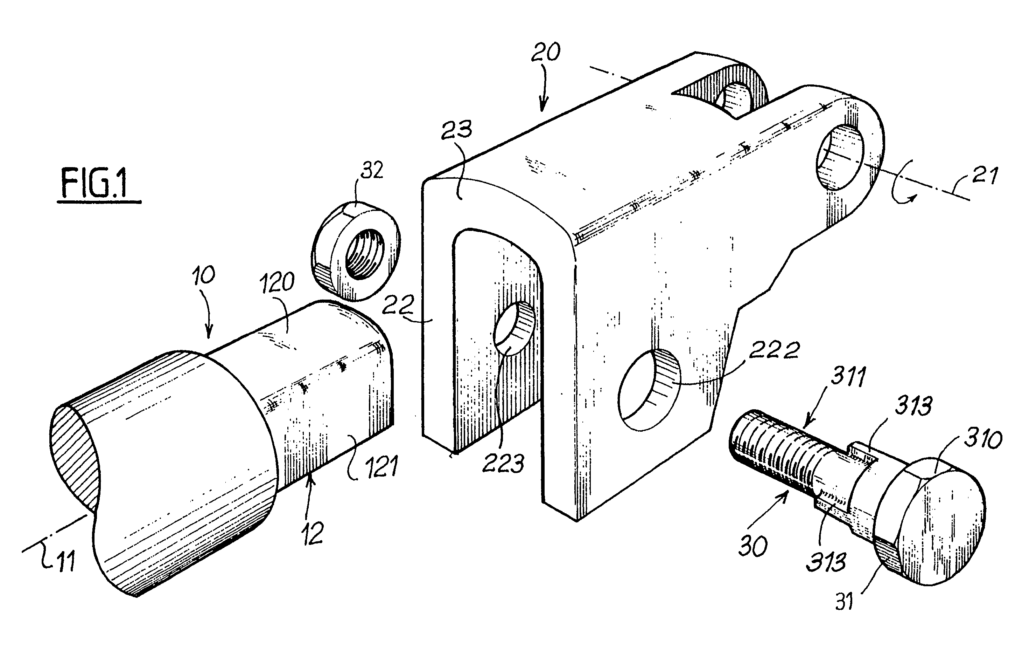

On se reportera maintenant à la Fig. 1 où l'on a dessiné schématiquement une vue perspective éclatée d'un dispositif d'accouplement selon la technique antérieure.

Dans la suite on utilise les mêmes numéros de référence pour désigner des éléments homologues qu'ils appartiennent à la technique courante ou à l'invention.

Comme on le voit, le dispositif selon la technique connue comprend, essentiellement, un arbre 10, un étrier 20 associé à un autre arbre non représenté et des moyens de blocage 30.

L'arbre 10 est dans ce cas une tige qui est par exemple solidaire d'un pignon d'un boîtier de direction d'automobile. Cette tige présente un axe 11 selon lequel est dirigée une queue 12 de section 120 non circulaire. Cette section non circulaire est par exemple obtenue en ménageant trois méplats 121, dont un seul est visible sur cette figure, sur la queue initialement cylindrique ; comme on le verra par la suite, le secteur cylindrique que subsiste facilite la mise en place.

L'étrier 20 est, par exemple, solidaire d'une mâchoire de joint de cardan avec laquelle il est fait d'un seul tenant, comme illustré. Cet étrier est susceptible de basculer suivant un axe 21, par exemple l'un des axes des tourillons du croisillon de cardan non représenté, dans le sens indiqué par une flèche. Comme on le voit, cet axe 21 est à la fois orthogonal à l'axe 11 de la tige et au plan des branches 22 de l'étrier. Ces branches 22 délimitent avec un pont 23 qui les relie un couloir non référencé destiné à recevoir la queue 12.

Comme on le voit, les branches sont transpercées d'un trou 222 et d'un orifice 223 dans le prolongement l'un de l'autre. Ce trou et cet orifice sont cylindriques de diamètre propre différent.

Les moyens de blocage 30 comprennent une vis 31 et un écrou 32. Comme illustré, la vis comprend une tête 310 avec un corps 311 pour partie portant des filets, non référencés, et pour partie portant des cames 313.

Pour solidariser tige 10 et étrier 20 on procède comme il suit à l'aide du dispositif selon la technique antérieure.

L'un des arbres est supposé équipé de son joint de cardan dont fait partie l'étrier et les positions axiales relatives de cet arbre et le l'arbre 10 sont telles que la queue 12 est sur la trajectoire que décrira l'étrier 20. De même les arbres ont les orientations relatives qui permettent l'engagement de la queue dans le couloir de l'étrier et ce dernier est incliné par rapport à la position illustrée, vers le haut de la figure.

On bascule l'étrier suivant son axe 21 dans le sens de la flèche de manière à le rabattre sur la queue 12 qu'il vient chevaucher. Ensuite, on engage dans le sens approprié la vis dans le trou et orifice des branches de l'étrier et puis on la munit de son écrou.

On fait alors tourner la vis de manière que l'une de ses cames 313 prennent appui sur l'un des méplats 121 de la queue afin de chasser celle-ci dans le fond du couloir contre le pont 23 qui relie les deux branches 22 approximativement parallèles de l'étrier; on élimine ainsi tout jeu transversal. On serre enfin l'écrou de manière à immobiliser la queue de la tige entre les branches de l'étrier. On peut aussi opérer, comme précédemment indiqué, en faisant tourner l'écrou de préférence équipé d'un frein.

On imagine facilement que si lors de l'opération d'assemblage l'arbre portant l'étrier tourne d'un demitour par rapport à la situation illustrée, et cela avant que la vis ait pu être engagée au moins partiellement dans les branches de l'étrier pour qu'elle dépasse quelque peu sous la queue, ce dernier basculera sous son propre poids et se dégagera de la queue. Il faudra alors commencer par faire tourner de nouveau l'arbre d'un demi-tour avant de pouvoir répéter l'opération.

On comprend donc que cette technique, avec tous ses aléas, n'est pas très sûre et est à l'origine de perte de temps lors de l'opération d'assemblage en atelier.

Outre cet inconvénient, on voit facilement que si la vis et l'écrou viennent à se desserrer, par suite de vibrations par exemple, l'écrou risque de se séparer de la vis et celle-ci peut alors se dégager. Si la vis sort de l'étrier et s'en sépare suffisamment ce dernier risque encore de se dégager de la queue, comme expliqué précédemment à propos de l'opération de montage. Si une telle situation se manifeste au cours de la conduite d'un véhicule automobile on relève immédiatement que le conducteur n'a plus d'action sur la direction de son véhicule : cela peut être à l'origine d'accidents très graves voire fatals.

L'invention vise à remédier à ce type de difficultés en faisant en sorte que le dispositif suivant l'invention permette un montage rapide et une fixation sûre et soit aussi d'une mise en oeuvre très facile et spécialement commode.

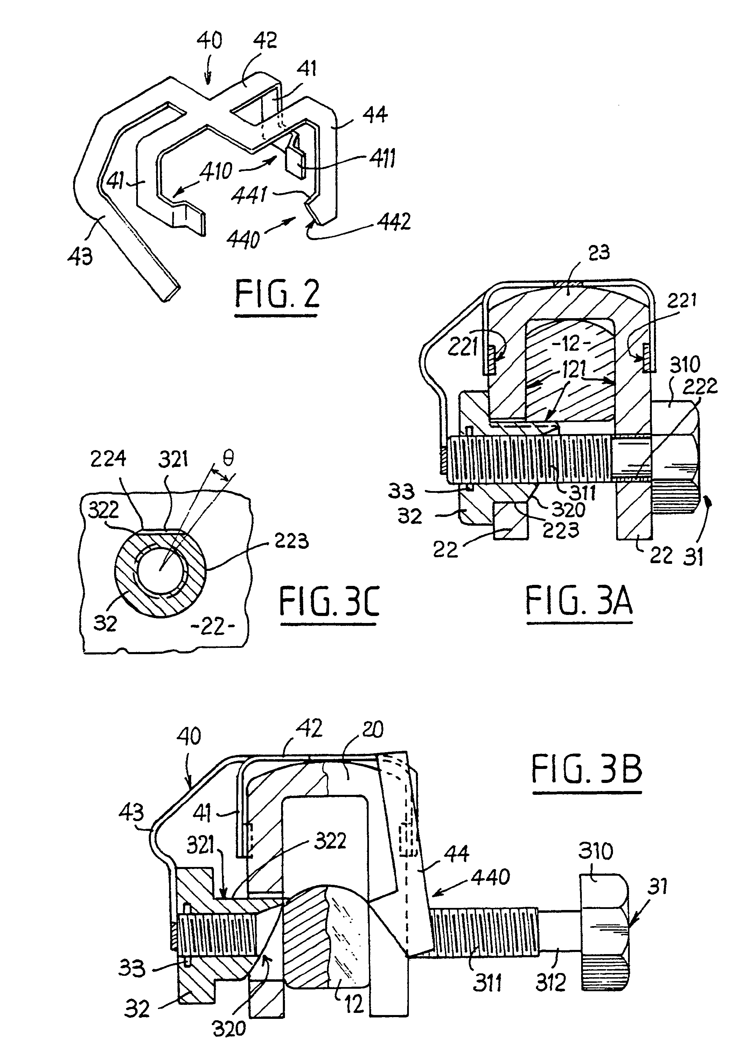

On se reportera maintenant en particulier aux Fig. 2 et 3 où est illustré un mode de réalisation d'un dispositif selon l'invention.

Le dispositif selon l'invention comprend, entre autres, un cavalier 40.

Comme on le voit ce cavalier, fait en un matériau élastique, comprend deux jambes 41 approximativement parallèles reliées par une barre 42 transversale de manière à présenter une configuration générale en U. A la barre est aussi associé un bras 43 et, le cas échéant, mais facultativement, une lame 44 sur laquelle on reviendra par la suite.

Comme illustré chaque jambe 41 est munie, à proximité de son extrémité libre, d'organes de maintien 410 faits, par exemple, de replis 411 contre-coudés approximativement en Z. Le rôle des organes de maintien apparaîtra par la suite.

Le bras 43 est destiné à coopérer élastiquement avec l'écrou 32.

La lame 44 se termine par un crochet 440 qui présente un appui 441 et un chanfrein 442.

Ce cavalier se présente normalement dans la configuration où il est dessiné sur la Fig. 2.

Le dispositif d'accouplement selon l'invention comprend des moyens de blocage 30 dont l'écrou 32 est pourvu d'un biseau 320, d'un détrompeur-orienteur 321, d'au moins une came 322 et, éventuellement, d'un frein 33.

Comme on l'observe notamment sur la Fig. 3, le trou 222 du dispositif selon l'invention est de préférence taraudé et l'orifice 223 n'est pas cylindrique mais présente un profil complémentaire de celui du détrompeur-orienteur 321. Ces profils complémentaires sont choisis de manière que l'écrou engagé dans sa branche puisse y coulisser axialement mais ne puisse y tourner que d'un angle θ relativement limité. Ceci est obtenu, par exemple, en ménageant le détrompeur-orienteur 321 sous la forme d'un plat et en munissant l'orifice 223 d'une corde 224 comme illustré clairement sur la Fig. 3C. La différence des dimensions du plat et de la corde autorise une rotation de l'angle θ. En outre, comme on le verra par la suite, l'arête du plat sert de came 322.

Initialement, l'étrier 20 est équipé de son écrou 32 et chevauché par le cavalier 40. Dans une telle situation, l'écrou peut coulisser selon son axe et peut seulement tourner d'un petit angle θ, relativement peu important, du fait de la coopération de son plat 321 qui peut rencontrer la corde 224 de l'orifice 223. Ceci permet aussi d'orienter convenablement, sans erreur possible, l'écrou de manière que son biseau 320 fasse saillie entre les branches 22 dans le sens convergent vers l'intérieur, comme illustré.

Le cavalier que chevauche l'étrier est immobilisé sur ce dernier par ses organes de maintien 410 qui sont de préférence engagés dans des logements 221 appropriés de branches comme dessiné.

D'autre part, comme on l'observe sur les Fig. 3A, 3B, le bras 43 prend appui sur l'écrou 32 qu'il maintient dans son orifice 223 et qu'il sollicite élastiquement de manière à l'y retenir en le poussant vers l'autre branche.

Initialement seuls les premiers filets du corps 311 de la vis sont engagés dans le trou taraudé 222 de manière que la vis n'empiète pas sur le couloir que délimitent les deux branches 22 et le pont 23 de l'étrier 20.

Ainsi, seul fait partiellement saillie élastiquement dans ce couloir l'écrou 32 dont le biseau 320 est dirigé à l'opposé du pont 23.

On fait alors basculer l'étrier autour de son axe 21 de manière qu'il vienne coiffer la queue 12 de la tige 10. Le biseau 320 de l'écrou 32 rencontre alors la queue de préférence une face non plane ou inclinée pour faciliter l'insertion, comme illustré. En poussant sur l'étrier la queue refoule l'écrou à l'encontre de la sollicitation élastique du bras 43 jusqu'à ce que la queue échappe au biseau. La queue de la tige se trouve alors entre les branches et le pont de l'étrier, retenue par le plat de l'écrou.

On peut alors engager plus avant la vis 31 dans le trou taraudé 222 jusqu'à ce qu'elle vienne en prise dans l'écrou. Ceci peut être facilité en donnant une entrée évasée, par exemple conique, à l'écrou comme illustré sur les Fig. 3A et 3B.

Lorsque la vis est suffisamment engagée dans l'écrou elle rencontre le frein 33 par exemple du type de celui commercialisé sous la dénomination Nylstop. Il faut alors développer un couple plus important pour continuer le vissage. Lorsqu'on développe ce couple plus important, la vis 31 fait tourner de l'angle θ l'écrou 32 dans son orifice 223 et sa came 322 vient porter contre la face de la queue qui lui est proche ; la came repousse alors la queue jusqu'à la placer en butée contre le pont 23, au fond du couloir. En poursuivant le vissage de la vis 31 dans l'écrou 32 on enserre la queue entre les branches de l'étrier qui se plaquent contre elle. La présence du dégagement 312 entre tête 310 et corps 311 de la vis 31 permet le serrage.

On voit donc que de la sorte on a complètement bloquer la queue de la tige dans l'étrier.

L'assemblage est sûr et exempt de perte de temps. En effet aussitôt que la queue insérée dans l'étrier a franchi et échappé à l'écrou, celui-ci revient dans le couloir et interdit à la queue d'en ressortir et cela même avant que la vis soit partiellement placée sous la queue. De plus tout ceci peut s'accomplir d'une seule main.

Si le cavalier du dispositif suivant l'invention est muni de la lame 44 qui est disposée pour que son crochet soit normalement au moins partiellement à l'aplomb du couloir, on voit (Fig. 3B) que ce dernier est aussi repoussé vers l'extérieur au moment du basculement de l'étrier sur la tige et que celui-ci revient ensuite élastiquement en place lorsque la queue lui a échappé. Ceci résulte de la présence du chanfrein 442 et de l'appui 441.

La phase d'insertion de la queue dans le couloir de l'étrier est clairement illustrée sur la Fig. 3B où l'écrou 32 et la lame 44 sont tous deux repoussés à l'extérieur par la queue à l'encontre des sollicitations élastiques qui s'exercent indépendamment sur eux.

Ce processus est analogue à celui qui provoque l'effacement momentanné de l'écrou lors du basculement de l'étrier sur la queue.

L'assemblage dans sa position finale est illustrée sur la Fig. 3A où la queue est bloquée dans l'étrier.

Même avant blocage et serrage, la queue est retenue dans l'étrier dès qu'elle a franchi et échappé à l'écrou et, le cas échéant au crochet de la lame.

Si maintenant vis et écrou venaient à se desserrer totalement et si la vis et l'écrou venaient à se dégager de l'étrier, on voit que cette lame avec son crochet retiendrait la queue dans l'étrier où elle ne serait toutefois plus serrée. Cet absence de serrage ferait apparaître un jeu qui serait immédiatement perçu par le conducteur du fait du "flottement" qu'il pourrait observer dans la conduite de son véhicule. Cette gêne, aussi désagréable soit elle, ne serait cependant pas fatale puisque la transmission du couple entre arbres menant et mené persiste, l'étrier continuant à enserrer la queue dont il ne peut se dégager.

On voit donc tous les avantages du dispositif d'accouplement suivant l'invention qui, dans tous les cas, facilite le montage et en outre peut assurer la sécurité.

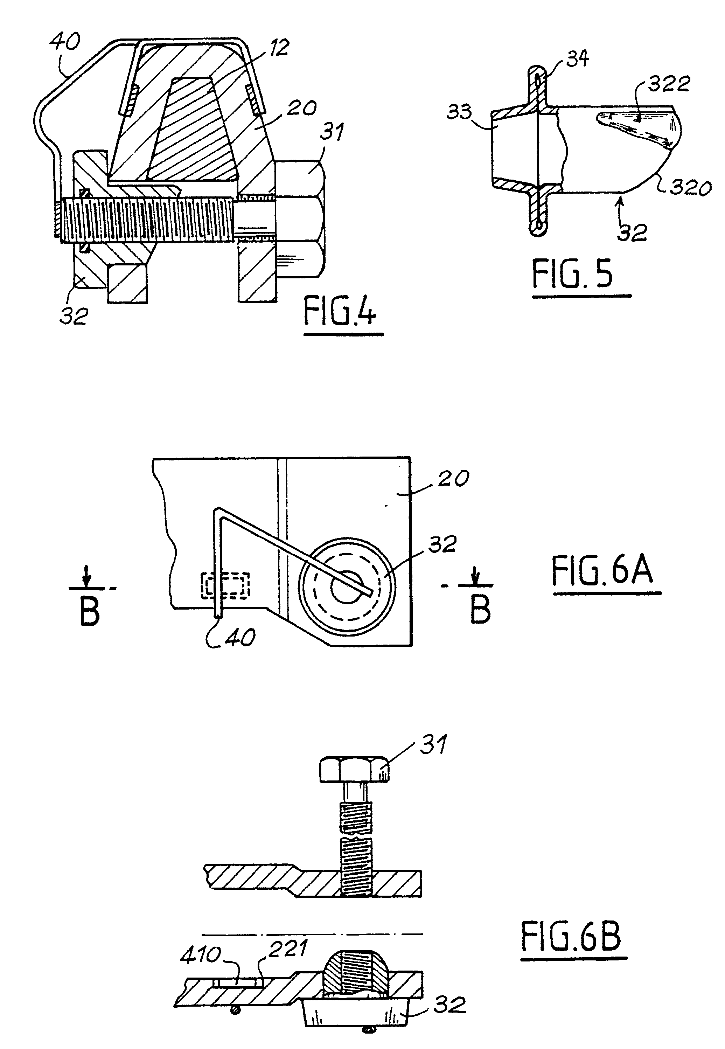

On se réfère maintenant à la Fig. 4 où on a représenté une variante de réalisation du dispositif selon l'invention ; ici la queue de la tige et l'étrier ne sont plus à section non circulaire à faces parallèles mais à faces inclinées à la manière d'un prisme tronqué. Pour le reste, la structure, la mise en place et le fonctionnement sont les mêmes que ceux exposés à propos du mode de réalisation illustré sur les Fig. 3.

Sur la Fig. 5, on a représenté un autre mode de réalisation de l'écrou du dispositif d'accouplement selon l'invention. Dans ce cas, l'écrou est obtenu par déformation d'un tronçon de tube. Ce tronçon de tube est conformé de manière à présenter un biseau 320, et une came 322 et de manière à servir aussi de frein 33 après son repli 34.

Le repli 34 sert d'appui pour absorber les efforts axiaux. Le frein 33 est obtenu en donnant une certaine conicité convergente vers l'extérieur, une déformation locale vers l'intérieur par exemple.

On a représenté sur les Figs. 6A et 6B, un autre mode de réalisation du cavalier du dispositif selon l'invention.

Dans ce mode de réalisation, le cavalier n'est pas muni d'une lame à crochet et au lieu d'être obtenu à partir d'une planche élastique par exemple métallique en bronze au glucinium s'il y a lieu mais à partir d'un fil rigide et élastique de préférence métallique tel qu'une corde à piano. On observe dans ce cas, par exemple, que les logements 221 destinés à recevoir des organes de maintien 410 ici en boucle ne sont plus ménagés sur les flancs extérieurs des branches de l'étrier mais sur les flancs intérieurs de celles-ci.

Pour assurer une bonne immobilisation du cavalier sur l'étrier on utilise des organes de maintien 410 qui coopèrent avec des logements 221. On peut aussi faire en sorte le cas échéant de ne pas avoir à se servir de logements. Par exemple, que le cavalier soit fait à partir d'une planche ou d'un fil, on peut agencer les organes de maintien pour qu'ils se présentent sous forme de protubérances qui se font face à proximité de chacune des extrémités libres des jambes 41 et qui ont, par exemple, l'aspect d'un cône à pointe acérée ou d'un tronc de cône à arête tranchante. Une telle pointe ou arête s'incruste dans les branches de l'étrier et y agrippe le cavalier. Une telle configuration peut être obtenue par un coup de pointeau débouchant ou non, ou analogue, lors du sectionnement du fil.

On décrira maintenant une variante d'exécution, non illustrée du détrompeur-orienteur 321.

Dans ce cas on n'utilise pas un écrou avec plat engagé dans un orifice 223 à corde 224 mais on se sert directement du bras 43 ; l'écrou avec sa came et son biseau et l'orifice sont alors en quelque sorte cylindriques et peuvent tourner l'un par rapport à l'autre sans limite angulaire imposée.

Pour ce faire on ménage sur la face extérieure de l'écrou sur laquelle repose normalement le bras 43, une rainure approximativement radiale dont la largeur est appropriée à celle du bras pour que celui-ci puisse s'y engager librement. Les positions relatives de cette rainure et du biseau 320 sont telles que lorsque l'écrou est enfilé dans son orifice et le bras inséré élastiquement dans la rainure, le biseau est orienté vers l'extérieur du couloir de l'étrier, à l'opposé du pont 23.

Pour ce faire on recourbe l'extrémité libre du bras 43, approximativement à angle droit, de manière qu'il se termine par prolongement qui peut pénétrer librement dans l'alésage taraudé de l'écrou. La longueur axiale de ce prolongement est telle que, le bras étant inséré dans la rainure, son bout dépasse le frein vers l'intérieur.

On met en place le cavalier sur l'étrier de manière que le bras repose dans la rainure de l'écrou et que son prolongement soit logé dans l'alésage de ce dernier.

L'écrou est ainsi immobilisé en rotation et orienté correctement par le bras reposant dans la rainure que forment le détrompeur-orienteur 321.

On procède à l'accouplement comme indiqué pour les autres modes de réalisation.

Lorsqu'on visse la vis dans l'écrou, celle-ci rencontre d'abord le bout du prolongement du bras qu'elle repousse progressivement au fur et à mesure de son engagement. Après un certain nombre de tour ou fraction de tour, le prolongement a été suffisamment repoussé pour que le bras se soit dégagé de la rainure : l'écrou, antérieurement immobilisé en rotation, est maintenant libre de tourner. Lorsque la vis rencontre le frein elle entraîne en rotation avec elle l'écrou jusqu'à ce que sa came refoule la queue au fond du couloir de l'étrier. La poursuite du vissage assure alors le blocage définitif comme déjà exposé.

Ce qui précède permet de saisir tout l'intérêt et tous les avantages du dispositif d'accouplement selon l'invention que contribue à faciliter l'assemblage en atelier et à accroître la sécurité en fonctionnement.

## Revendications

1. Dispositif d'accouplement rapide à sécurité pour réunir un arbre menant et un arbre mené notamment une tige (10) à queue (12) de section (120) non circulaire et un étrier (20) de section en U orientable suivant un axe (21) orthogonal à celui (11) des arbres et à ses branches (22) qui se font face et muni de moyens de blocage (30) traversant ces branches (22) pour emprisonner et serrer cette queue (12) dans le couloir que délimitent celles-ci caractérisé en ce qu'il comprend un cavalier (40) en matériau élastique de configuration générale en U agencé pour chevaucher l'étrier (20) et pourvu de deux jambes (41) approximativement parallèles coopérant avec les branches (22) en vis-à-vis correspondantes de l'étrier pour s'y fixer à l'aide d'organes de maintien (410) et d'un bras (43) disposé du côté de l'une des jambes (41) et destiné à coopérer avec une partie des moyens de blocage (30) de manière à la solliciter élastiquement afin qu'elle ait tendance à faire saillie au moins partiellement dans le couloir entre les branches (22), et en ce que cette partie des moyens de blocage (30) est un écrou (32) qui présente un biseau (320) et au moins une came (322), en ce que l'une des branches (22) est transpercée d'un orifice (223), et en ce que cet écrou (32) est engagé dans cet orifice (223) de manière à y coulisser et à n'y pouvoir tourner que d'un angle (θ) restreint et est orienté de manière que son biseau (320) fasse élastiquement saillie entre les branches (22) dans le sens convergent vers l'intérieur sous l'action du bras (43) afin de permettre l'insertion puis la retenue de la queue (12) dans l'étrier (20) et de manière que sa came (322) soit dirigée vers l'intérieur.

2. Dispositif conforme à la revendication 1, caractérisé en ce l'écrou (32) présente un détrompeur-orienteur (321) sur sa surface extérieure et en ce que cet orifice (223) présente un profil (224) complémentaire autorisant éventuellement une rotation suivant un angle (θ) relativement petit.

3. Dispositif conforme à la revendication 2, caractérisé en ce que ce détrompeur-orienteur (321) est un plat dont au moins une arête sert de came (322) et en ce que ce profil (224) complémentaire de l'orifice (223) est une corde.

4. Dispositif conforme à l'une quelconque des revendications 1 à 3, caractérisé en ce que cet écrou (32) est équipé d'un frein (33).

5. Dispositif conforme à l'une quelconque des revendications 1 à 4, caractérisé en ce que ces moyens de blocage (30) comprennent une vis (31), en ce que l'autre des branches (22) est percée d'un trou (222) taraudé et en ce que cette vis (31) est engagée dans ce trou taraudé (222) de manière à pouvoir se visser dans l'écrou (32).

6. Dispositif conforme à la revendication 5, caractérisé en ce que cette vis (31) comprend une tête (310), un corps fileté (311) et un dégagement (312) entre tête et filets.

7. Dispositif conforme à l'une quelconque des revendications 1 à 6, caractérisé en ce que le cavalier (40) comprend une lame (44) élastique terminée par un crochet (440) et en ce que ce crochet (440) est normalement disposé pour être au moins partiellement à l'aplomb du couloir.

8. Dispositif conforme à la revendication 7, caractérisé en ce que ce crochet (440) présente un chanfrein (442) incliné dans le sens convergent vers l'intérieur et un appui (441) orienté pratiquement orthogonalement aux branches (22) afin de permettre l'insertion puis la retenue de la queue (12) dans l'étrier (20).

9. Dispositif conforme à l'une quelconque des revendications 1 à 8, caractérisé en ce que les organes de maintien (410) sont des replis ou des boucles (411) à l'extrémité libre des jambes (41).

10. Dispositif conforme à la revendication 9, caractérisé en ce que ces branches (22) sont munies de logements (221) destinés à recevoir les organes de maintien (410).

11. Dispositif conforme à l'une quelconque des revendications 1 à 10, caractérisé en ce que le cavalier (40) est fait à partir d'une planche élastique.

12. Dispositif conforme à l'une quelconque des revendications 1 à 10, caractérisé en ce que le cavalier (40) est fait à partir d'un fil rigide et élastique.

13. Dispositif conforme à l'une quelconque des revendications 1 à 12, caractérisé en ce que les branches (22) de l'étrier (20) ont des faces en regard parallèles.

14. Dispositif conforme à l'une quelconque des revendications 1 à 12, caractérisé en ce que les branches (22) de l'étrier (20) ont des faces en regard inclinées.

15. Dispositif conforme à l'une quelconque des revendications précédentes hormis les revendications 2 ou 3, caractérisé en ce que l'écrou (32) présente un détrompeur-orienteur (321) sur sa face extérieure opposée au biseau (320) sous la forme d'une rainure et en ce que le bras est destiné à reposer au moins partiellement dans cette rainure et se termine par un prolongement recourbé destiné à s'engager dans l'alésage taraudé de l'écrou.

16. Dispositif conforme à l'une quelconque des revendications précédentes caractérisé en ce que les organes de maintien (410) sont pourvus de protubérances vives pour s'incruster dans les branches (22) de l'étrier (20).

17. Dispositif conforme à l'une quelconque des revendications 1 à 16, caractérisé en ce que l'étrier (20) est solidaire d'une mâchoire de joint de cardan et son axe (21) est celui d'un croisillon.

18. Application du dispositif conforme à l'une quelconque des revendications 1 à 17, à une direction d'automobile.

**Patentansprüche**

1. Sicherheitsschnellkupplungsvorrichtung zum Verbinden einer Antriebswelle mit einer angetriebenen Welle, insbesondere einer Stange (10) mit Endstück (12) von nicht kreisförmigem Querschnitt (120) und einem Bügel (20) von U-Querschnitt, der gemäß einer Achse (21) rechtwinklig zu jener (11) der Wellen und zu seinen Armen (22) ausrichtbar ist, die einander gegenüberliegen und mit Verriegelungseinrichtungen (30) versehen sind, die diese Arme (22) durchqueren, um dieses Endstück (12) einzuschließen und einzuklemmen in dem Kanal, den diese begrenzen, **dadurch gekennzeichnet**, daß sie eine Klammer (40) aus elastischem Material von in allgemeiner U-Form aufweist, die angeordnet ist, um den Bügel (20) zu übergreifen und die mit zwei Schenkeln (41) versehen ist, die im wesentlichen parallel ausgebildet sind und mit den entsprechenden gegenüberliegenden Armen (22) der Klammer zusammenwirken, um sich dort mit Hilfe von Halteorganen (410) und einem Arm (43) festzulegen, der auf der Seite einer der Schenkel (41) angeordnet ist und dazu bestimmt ist, mit einem Bereich der Blockierungseinrichtungen (30) derart zusammenzuwirken, daß er sie elastisch beaufschlagt, damit sie dazu tendiert, wenigstens teilweise in den Kanal zwischen den Armen (22) vorzuspringen, und daß dieser Bereich der Verriegelungseinrichtungen (30) eine Mutter (32) ist, die eine Abschrägung (320) und wenigstens einen Nocken (322) aufweist, daß einer der Arme (22) von einer Öffnung (223) durchsetzt ist, und daß diese Mutter (32) in diese Öffnung (223) derart eingreift, daß sie darin gleitet und dort nur um einen Winkel (θ) sich drehen kann, der beschränkt ist und derart ausgerichtet ist, daß ihre Abschrägung (320) elastisch zwischen den Armen (22) in konvergierder Richtung nach innen unter Einwirkung des Arms (43) vorspringt, um die Einführung und sodann den Halt des Endstücks (12) in dem Bügel zu erlauben und derart, daß ihr Nocken (322) nach innen gerichtet ist.

2. Vorrichtung nach Anspruch 1, **dadurch gekennzeichnet**, daß die Mutter (32) ein Verwechslungssicherungsausrichtungsteil (321) auf ihrer Außenseite aufweist, und daß diese Öffnung (223) ein komplementäres Profil (224) aufweist, das gegebenenfalls eine Drehung gemäß einem relativ kleinen Winkel (θ) erlaubt.

3. Vorrichtung nach Anspruch 2, **dadurch gekennzeichnet**, daß das Verwechslungssicherungsausrichtungsteil (321) eine Abflachung ist, von der wenigstens eine Kante als Nocken (322) dient und daß dieses zugehörige Profil (224) der Öffnung (223) eine Sehne ist.

4. Vorrichtung nach einem der Ansprüche 1 bis 3, **dadurch gekennzeichnet**, daß diese Mutter (32) mit einer Bremse (33) versehen ist.

5. Vorrichtung nach einem der Ansprüche 1 bis 4, **dadurch gekennzeichnet**, daß die Blockierungseinrichtungen (30) eine Schraube (31) aufweisen, daß der andere der Arme (22) mit einem Gewindeloch (222) durchsetzt ist und daß diese Schraube (31) in das Gewindeloch (222) derart eingreift, daß sie sich in die Mutter (32) einschrauben kann.

6. Vorrichtung nach Anspruch 5, **dadurch gekennzeichnet**, daß diese Schraube (31) einen Kopf (310), einen Gewindekörper (311) und einen freien Absatz (312) zwischen Kopf und Gewinde aufweist.

7. Vorrichtung nach einem der Ansprüche 1 bis 6, **dadurch gekennzeichnet**, daß die Klammer (40) eine elastische, durch einen Haken (440) beendete Zunge aufweist und daß der Haken (440) normalerweise angeordnet ist, um wenigstens teilweise Lot dem Kanal zu sein.

8. Vorrichtung nach Anspruch 7, **dadurch gekennzeichnet**, daß der Haken (440) eine Abfasung (442) aufweist, die in konvergierender Richtung nach innen geneigt ist und einen Anschlag (441) aufweist, der praktisch senkrecht zu den Armen (22) ausgerichtet ist, um die Einführung und den Rückhalt des Endstücks (12) in der Klammer (20) zu erlauben.

9. Vorrichtung nach einem der Ansprüche 1 bis 8, **dadurch gekennzeichnet**, daß die Halteorgane (410) Umbördelungen oder Ringe (411) am freien Ende der Schenkel (41) sind.

10. Vorrichtung nach Anspruch 9, **dadurch gekennzeichnet**, daß die Arme (22) mit Aufnahmen (221) versehen sind, die dazu bestimmt sind, die Rückhalteorgane (410) aufzunehmen.

11. Vorrichtung nach einem der Ansprüche 1 bis 10, **dadurch gekennzeichnet**, daß die Klammer (40), ausgehend von einer elastischen Platte geformt ist.

12. Vorrichtung nach einem der Ansprüche 1 bis 10, **dadurch gekennzeichnet**, daß die Klammer (40), ausgehend von einem starren und elastischen Draht gebildet ist.

13. Vorrichtung nach einem der Ansprüche 1 bis 12, **dadurch gekennzeichnet**, daß die Arme (22) der Klammer (20) gegenüberliegende parallele Seiten aufweisen.

14. Vorrichtung nach einem der Ansprüche 1 bis 12, **dadurch gekennzeichnet**, daß die Arme (22) der Klammer (20) einander gegenüberliegend geneigte Seiten aufweisen.

15. Vorrichtung nach einem der vorhergehenden Ansprüche, außer den Ansprüchen 2 oder 3, **dadurch gekennzeichnet**, daß die Mutter (32) ein Verwechslungssicherungsausrichtungseil (321) auf seiner äußeren Seite gegenüber der Abschrägung (320) in Form einer Kerbe aufweist und daß der Arm dazu, um wenigstens teilweise in der Kerbe zu ruhen bestimmt ist und beendet wird durch eine gebogene Verlängerung, die dazu um in die Gewindeausnehmung der Mutter einzugreifen bestimmt ist.

16. Vorrichtung nach einem der vorhergehenden Ansprüche, **dadurch gekennzeichnet, daß die** Rückhalteorgane (410) mit scharfen Vorsprüngen versehen sind, um sich in die Arme (22) der Klammer (20) zu verkrusten bzw. zu verkrallen.

17. Vorrichtung nach einem der Ansprüche 1 bis 6, **dadurch gekennzeichnet,** daß die Klammer (20) mit einer Kardanverbindungsklemme verbunden ist und ihre Achse (21) jener eines Kreuzzapfens ist.

18. Verwendung der Vorrichtung nach einem der Ansprüche 1 bis 17 bei einer Kraftfahrzeuglenkung.

## Claims

1. Quick-coupling security device for connecting an input shaft and an output shaft, in particular a bar (10) having an end piece (12) of non-circular section (120) and a stirrup (20) of U-shaped section, which may be oriented along an axis (21) at right angles to that (11) of the shafts and to its arms (22), which are opposite one another, this stirrup being equipped with blocking means (30) passing through these arms (22) to trap and clamp this end piece (12) in the passage delimited by these arms, characterized in that it comprises a staple (40) of resilient material, which is generally U shaped arranged to straddle the stirrup (20), and is provided with two approximately parallel legs (41) cooperating with the corresponding facing arms (22) of the stirrup to be fixed there with the aid of holding members (410) and with an arm piece (43) arranged at the side of one of the legs (41) and intended to cooperate with part of the blocking means (30) so as to urge it resiliently such that it tends to project at least partly into the passage between the arms (22), and in that this part of the blocking means (30) is a nut (32) which has a bevel (320) and at least one cam (322), in that one of the arms (22) is pierced through by an orifice (223), and in that this nut (32) engages in this orifice (223) so as to slide therein and to be able to turn only by a restricted angle (θ) and is oriented such that its bevel (320) projects resiliently between the arms (22) in the direction converging towards the interior under the action of the arm piece (43) in order to enable the end piece (12) to be inserted and then retained in the stirrup (20) and so that its cam (322) is directed towards the interior.

2. Device according to Claim 1, characterized in that the nut (32) has a polarizing orientation means (321) on its outer surface, and in that this orifice (223) has a complementary profile (224) possibly permitting a rotation in accordance with a relatively small angle (θ).

3. Device according to Claim 2, characterized in that this polarizing orientation means (321) is a flat area whereof at least one edge serves as a cam (322), and in that this complementary profile (224) of the orifice (223) is a chord.

4. Device according to any one of Claims 1 to 3, characterized in that this nut (32) is equipped with a brake (33).

5. Device according to any one of Claims 1 to 4, characterized in that these blocking means (30) comprise a screw (31), in that the other of the arms (22) is pierced by a threaded hole (222), and in that this screw (31) engages in this threaded hole (222) such that it can be screwed into the nut (32).

6. Device according to Claim 5, characterized in that this screw (31) comprises a head (310), a threaded body (311) and a part (312) providing spacing between head and threads.

7. Device according to any one of Claims 1 to 6, characterized in that the staple (40) comprises a resilient blade (44) ending in a hook (440), and in that this hook (440) is normally arranged to be at least partly perpendicular to the passage.

8. Device according to Claim 7, characterized in that this hook (440) has a chamfer (442) inclined in the direction converging towards the interior and a bearing surface (441) oriented virtually at right angles to the arms (22) in order to enable the end piece (12) to be inserted and then retained in the stirrup (20).

9. Device according to any one of Claims 1 to 8, characterized in that the holding members (410) are double folds or loops (411) at the free end of the legs (41).

10. Device according to Claim 9, characterized in that these arms (22) are equipped with seatings (221) intended to receive the holding members (410).

11. Device according to any one of Claims 1 to 10, characterized in that the staple (40) is made from a resilient board.

12. Device according to any one of Claims 1 to 10, characterized in that the staple (40) is made from a rigid and resilient wire.

13. Device according to any one of Claims 1 to 12, characterized in that the arms (22) of the stirrup (20) have parallel opposite faces.

14. Device according to any one of Claims 1 to 12, characterized in that the arms (22) of the stirrup (20) have inclined opposite faces.

15. Device according to any one of the preceding claims except the claims 2 or 3, characterized in that the nut (32) has a polarizing orientation means (321) on its outer face opposite the bevel (320) in the form of a groove, and in that the arm is intended to rest at least partly in this groove and ends in a curved extension piece intended to engage in the threaded bore of the nut.

16. Device according to any one of the preceding claims, characterized in that the holding members (410) are provided with sharp protuberances for embedding in the arms (22) of the stirrup (20).

17. Device according to any one of Claims 1 to 16, characterized in that the stirrup (20) is in one piece with a universal joint jaw and its axis (21) is that of a journal cross.

18. Application of the device according to any one of Claims 1 to 17, to a motor vehicle steering gear.

FIG.1

EP 0 323 298 B1

FIG. 2

FIG. 3C

FIG. 3A

FIG. 3B

FIG.4

FIG.5

FIG.6A

FIG.6B